# FASCICULE DE BREVET EUROPEEN

(11) **EP 1 255 796 B1**
(45) Date de publication et mention de la délivrance du brevet: **06.07.2005**
(21) Numéro de dépôt: 01909775.7
(22) Date de dépôt: 16.02.2001
(51) Int. Cl.: C09K 11/85, C01F 17/00, G01T 1/202

(54) **CRISTAUX SCINTILLATEURS, PROCEDE DE FABRICATION, APPLICATION DE CES CRISTAUX**
SZINTILLATORKRISTALLE, VERFAHREN ZUR DEREN HERSTELLUNG UND ANWENDUNG DIESER KRISTALLE
SCINTILLATOR CRYSTALS, METHOD FOR MAKING SAME, USE THEREOF

(30) Priorité: 17.02.2000 NL 1014401
(43) Date de publication de la demande: 13.11.2002
(73) Titulaire: STICHTING VOOR DE TECHNISCHE WETENSCHAPPEN, 3527 JP Utrecht (NL)
(72) Inventeur: DORENBOS, Pieter, NL-2281 GM Rijswijk (NL); VAN EIJK, Carel, Wilhelm, Eduard, NL-2625 LS Delft (NL); GÜDEL, Hans-Ulrich, CH-3174 Thörishaus (CH); KRÄMER, Karl, Wilhelm, CH-3012 Bern (CH); VAN LOEF, Edgar, Valentijn, Dieuwer, NL-3071 AP Rotterdam (NL)
(74) Mandataire: Colombier, Christian
(86) Numéro de dépôt international: PCT/EP2001/001837
(87) Numéro de publication internationale: WO 2001/060944

(56) Documents cités:
- US-A- 4 761 347
- US-A- 5 015 860
- DATABASE CHEMABS [en ligne] CHEMICAL ABSTRACTS SERVICE, COLUMBUS, OHIO, US; PELLETIER-ALLARD, N. ET AL: "Multiphoton excitations in neodymium chlorides" retrieved from STN Database accession no. 107:225257 CA XP002176464 & PHYS. REV. B: CONDENS. MATTER (1987), 36(8), 4425-7 ,
- DATABASE CHEMABS [en ligne] CHEMICAL ABSTRACTS SERVICE, COLUMBUS, OHIO, US; SKJAERET, J ET AL: "Competing interactions and properties of cerium lanthanum chloride (Ce1-xLaxCl3)" retrieved from STN Database accession no. 119:284498 CA XP002176465 & J. MAGN. MAGN. MATER. (1993), 127(1-2), 163-8 ,
- O. GUILLOT-NO L ET AL.: "Optical scintillation properties of cerium-doped LaCl3, LuBr3 and LuCl3" JOURNAL OF LUMINESCENCE, vol. 85, 1999, pages 21-35, XP001023576 cité dans la demande
- DATABASE INSPEC [en ligne] INSTITUTE OF ELECTRICAL ENGINEERS, STEVENAGE, GB; VOLOSHINOVSKII A S ET AL: "Luminescence properties of cerium chloride" Database accession no. 4726740 XP002150542 & FIZIKA TVERDOGO TELA, FEB. 1994, RUSSIA, vol. 36, no. 2, pages 436-443, ISSN: 0367-3294

## Description

La présente invention concerne des cristaux scintillateurs, un procédé de fabrication permettant de les obtenir et l'utilisation desdits cristaux, notamment dans des détecteurs pour rayons gamma et/ou rayons X.

Les cristaux scintillateurs sont largement utilisés dans des détecteurs pour rayons gamma, rayons X, rayons cosmiques et particules dont l'énergie est de l'ordre de 1 KeV et également supérieure à cette valeur.

Un cristal scintillateur est un cristal transparent dans le domaine de longueur d'onde de scintillation, qui répond à une radiation incidente par l'émission d'une impulsion lumineuse.

A partir de tels cnstaux, généralement de monocristaux, on peut fabriquer des détecteurs où la lumière émise par le cristal que comprend le détecteur, est couplée à un moyen de détection de la lumière et produit un signal électrique proportionnel au nombre d'impulsions lumineuses reçus et à leur intensité. De tels détecteurs sont utilisés notamment dans l'industrie pour des mesures d'épaisseur ou de grammage, dans les domaines de la médecine nucléaire, de la physique, de la chimie, de la recherche pétrolière.

Une famille de cristaux scintillateurs connus et utilisés largement est du type iodure de Sodium dopé au Thallium, Nal (TI). Ce matériau scintillateur découvert en 1948 par Robert Hofstadter et qui est à la base des scintillateurs modernes reste encore le matériau prédominant dans ce domaine malgré près de 50 années de recherches sur d'autres matériaux. Cependant ces cnstaux ont une décroissance de scintillation peu rapide.

Un maténau également utilisé est le Csl, qui en fonction des applications peut être utilisé pur, ou dopé soit avec du Thalium (TI) soit avec du Sodium (Na)

Une famille de cristaux scintillateurs qui a connu un grand développement est du type germanate de Bismuth (BGO). Les cristaux de la famille BGO ont des constantes de temps de décroissance élevées, qui limitent l'emploi de ces cristaux à de faibles taux de comptage.

Une famille plus récente de cristaux scintillateurs a été développée dans les années 1990 et est du type oxyorthosilicate de Lutécium activé au cénum LSO(Ce) Cependant ces cristaux sont très hétérogènes et ont des points de fusion très élevés (environ 2200°C).

Le développement de nouveaux matériaux scintillateurs aux performances améliorées fait l'objet de nombreuses études

Un des paramètres que l'on cherche à améliorer est la résolution en énergie.

En effet dans la plupart des applications des détecteurs nucléaires, une bonne résolution en énergie est souhaitée La résolution en énergie d'un détecteur de rayonnement nucléaire détermine en effet sa capacité à séparer des énergies de rayonnement très voisines Elle est usuellement déterminée pour un détecteur donné à une énergie donnée, comme la largeur à mi hauteur du pic considéré sur un spectre en énergie obtenu à partir de ce détecteur, rapportée à l'énergie à la centroide du pic (voir notamment G.F Knoll, "Radiation Detection and Measurement", John Wiley and Sons, Inc, 2^{nd} édition, p 114). Dans la suite du texte, et pour toutes les mesures effectuées, la résolution est déterminée à 662 keV, énergie de l'émission gamma principale du ¹³⁷Cs.

Plus la valeur de la résolution en énergie est faible, meilleure est la qualité du détecteur On considère que des résolutions en énergie de l'ordre de 7 % permettent d'obtenir de bons résultats. Néanmoins des valeurs inférieures de résolution présentent un grand intérêt.

Par exemple, dans le cas d'un détecteur utilisé pour analyser différents isotopes radioactifs, une meilleure résolution en énergie permet une meilleure distinction de ces isotopes.

Une augmentation de la résolution en énergie est particulièrement avantageuse pour un dispositif d'imagerie médicale par exemple de type Gamma camera d'Anger ou Tomographe à Emission de Positron (TEP), car elle permet d'améliorer fortement le contraste et la qualité des images, permettant ainsi une détection plus précise et plus précoce des tumeurs.

Un autre paramètre très important est la constante de temps de décroissance de la scintillation(dite " decay time "), ce paramètre est usuellement mesuré par la méthode dite "Start Stop" ou "Multi hit méthod", (décrite par W.W Moses (Nucl Instr and Meth. A336 (1993) 253).

Une constante de temps de décroissance la plus faible possible est souhaitée, de façon à pouvoir augmenter la fréquence de fonctionnement des détecteurs Dans le domaine de l'imagerie médical nucléaire, ceci permet par exemple de réduire considérablement les durée d'examens. Une constante de temps de décroissance peu élevée permet de plus d'améliorer la résolution temporelle des dispositifs détectant des évènements en coincidence temporelle. C'est le cas des Tomographes à Emission de Positron (TEP), où la réduction de la constante de temps de décroissance du scintillateur permet d'améliorer significativement les images en rejetant avec plus de précision les événements non coïncidents.

En général le spectre de déclin de scintillation en fonction du temps peut être décomposé en une somme d'exponentielles caractérisées chacune par une constante de temps de décroissance

La qualité d'un scintillateur est essentiellement déterminée par les propriétés de la contribution de la composante d'émission la plus rapide.

Les matériaux scintillateurs usuels ne permettent pas d'obtenir à la fois des bonnes résolutions en énergie et des constantes de temps de décroissance rapides.

En effet des matériaux comme le Nal(Tl) présentent une bonne résolution en énergie sous excitation gamma, d'environ 7 % mais une constante de temps de décroissance élevée d'environ 230 ns. De même Csl(Tl) et Csl(Na) ont des constantes de temps de décroissance élevées, notamment supérieures à 500 ns.

Des constantes de temps de décroissance peu élevées peuvent être obtenues avec LSO(Ce), notamment de l'ordre de 40 ns, mais la résolution en énergie sous excitation gamma à 662 keV de ce matériau est généralement supérieure à 10 %.

Récemment des matériaux scintillateurs ont été divulgués par O. Guillot-Noël et al. ("Optical and scintillation properties of cerium doped LaCl₃, LuBr₃ and LuCl₃" in Journal of Luminescence 85 (1999) 21-35). Cet article décrit les propriétés de scintillation de composés dopés au cérium tels que LaCl₃ dopé par 0,57 mole % Ce ; LuBr₃ dopé par 0,021 mole %, 0,46 mole % et 0,76 mole % Ce ; LuCl₃ dopé par 0,45 mole % Ce. Ces matériaux scintillateurs ont des résolutions en énergie assez intéressantes, de l'ordre de 7 % et des constantes de temps de décroissance de la composante rapide de scintillation assez faibles, notamment comprises entre 25 et 50 ns. Cependant l'intensité de la composante rapide de ces matériaux est faible, notamment de l'ordre de 1000 à 2000 photons par MeV et ne permet pas leur emploi en tant que composant d'un détecteur performant.

Le document PELLETIER-ALLARD, N. ET AL: "Multiphoton excitations in neodymium chlorides" de STN Database accession no. 107:225257 CA XP002176464 & PHYS. REV. B: CONDENS. MATTER (1987), 36(8), 4425-7 , concerne la fluorescence de cristaux de La₁₋ₓCeₓCl₃ : Nd³⁺ (0 ≤ x ≤ 1).

Le document SKJAERET, J ET AL: "Competing interactions and properties of cerium lanthanum chloride (Ce1-xLaxCl3)" de STN Database accession no. 119:284498 CA XP002176465 & J. MAGN. MAGN. MATER. (1993), 127(1-2), 163-8 , enseigne des propriétés magnétiques de matériaux La_{0,05}Ce_{0,95}Cl₃ et La_{0,15}Ce_{0,85}Cl₃.

L'objet de la présente demande porte sur un matériau susceptible de présenter simultanément une bonne résolution en énergie, notamment au moins aussi bonne que celle du Nal(Tl), une constante de temps de décroissance faible, notamment au moins équivalente à celle du LSO(Ce), et dont l'intensité de la composante rapide de scintillation est adaptée à la réalisation de détecteurs performants, notamment est supérieure à 4000 ph/MeV (photon par MeV), voire même supérieure à 8000 ph/MeV (photon par MeV).

Ce but est atteint selon l'invention par un matériau scintillateur inorganique de composition générale M₁₋ₓCeₓCl₃, où M est choisi parmi les éléments ou les mélanges d'éléments du groupe : Y, La, Gd, Lu, notamment parmi les éléments ou les mélanges d'éléments du groupe : La, Gd, Lu, et où x est le taux molaire de substitution de M par du cérium, avec x supérieur ou égal à 1 mole % et inférieur ou égal à 50 moles %.

Ce but est également atteint selon l'invention par un matériau scintillateur inorganique sous forme de monocristal, de composition générale M₁₋ₓCeₓCl₃, où M est choisi parmi les lanthanides ou les mélanges de lanthanides, de préférence parmi les éléments ou les mélanges d'éléments du groupe : Y, La, Gd, Lu, notamment parmi les éléments ou les mélanges d'éléments du groupe : La, Gd, Lu, et où x est le taux molaire de substitution de M par du cérium, avec x supérieur ou égal à 1 mole % et strictement inférieur à 100 moles %.

L'invention concerne également un détecteur de scintillation comprenant un matériau scintillateur inorganique de composition générale M₁₋ₓCeₓCl₃, où M est choisi parmi les lanthanides ou les mélanges de lanthanides, de préférence parmi les éléments ou les mélanges d'éléments du groupe : Y, La, Gd, Lu, notamment parmi les éléments ou les mélanges d'éléments du groupe : La, Gd, Lu, et où x est le taux molaire de substitution de M par du cérium, avec x supérieur ou égal à 1 mole % et strictement inférieur à 100 moles %.

On entend par lanthanides les éléments de transition de numéro atomique 57 à 71, ainsi que l'Yttrium (Y), comme il est usuel dans le domaine technique de l'invention.

Un matériau scintillateur inorganique selon l'invention est substantiellement constitué de M₁₋ₓCeₓCl₃ et peut comprendre également des impuretés usuelles dans le domaine technique de l'invention. Les impuretés usuelles sont en général des impuretés provenant des matières premières dont le taux est notamment inférieur à 0,1%, voire même inférieur à 0,01%, et/ou des phases parasites dont le pourcentage volumique est notamment inférieur à 1%.

En effet, les inventeurs ont su montrer que les composés de M₁₋ₓCeₓCl₃ définis ci-dessus, où le taux de cérium est supérieur ou égal à 1 mole % présentent des propriétés remarquables. L'émission de scintillation des matériaux selon l'invention présente une composante rapide intense (d'au moins 4000 ph/MeV) et de constante de temps de décroissance faible, de l'ordre de 25 ns. Ces matériaux présentent simultanément une excellente résolution en énergie à 662 keV, notamment inférieure à 5 %, et même à 4 %.

Ces propriétés sont d'autant plus remarquables qu'elles sont inattendues et mettent en évidence une grande discontinuité de caractéristiques à partir de 1 mole % de cérium. Cette sélection de composition est d'autant plus surprenante que les scintillateurs dopés cérium ayant de bonnes performances tels que le LSO contiennent moins de 1% de Cerium, et préférentiellement environ 0,2% (voir par exemple M.Kapusta et al, "Comparison of the scintillation properties of LSO.Ce Manufactured by different Laboratories and of LGSO:Ce", IEEE transaction on Nuclear Science, Vol 47, N°4, August 2000)

Un matériau préféré selon l'invention est de formule La₁₋ₓCeₓCl₃

Selon un mode de réalisation, le matériau scintillateur selon l'invention a une résolution en énergie inférieure à 5 %.

Selon un autre mode de réalisation, le matériau scintillateur selon l'invention a une constante de temps de décroissance rapide inférieure à 40 ns, voire même inférieure à 30 ns.

Selon un mode de réalisation préféré, le matériau scintillateur selon l'invention a à la fois une résolution en énergie inférieure à 5 % et une constante de temps de décroissance rapide inférieure à 40 ns, voire même inférieure à 30 ns.

De manière préférée, le taux de cérium, x, est compris entre 1 mole % et 90 mole %, et même notamment supérieur ou égal à 2 mole %, voire même supérieur ou égal à 4 mole % et/ou de préférence inférieur ou égal à 50 mole %, voire même inférieur ou égal à 30 mole %.

Selon un mode de réalisation le matériau scintillateur selon l'invention est un monocristal permettant d'obtenir des pièces d'une grande transparence dont les dimensions sont suffisantes pour arrêter et détecter efficacement les rayonnements à détecter, y compris à haute énergie. Le volume de ces monocristaux est notamment de l'ordre de 10 mm³ , voire supérieur à 1 cm³ et même supérieur à 10 cm³.

Selon un autre mode de réalisation, le matériau scintillateur selon l'invention est une poudre ou polycristal par exemple sous la forme de poudres mélangées avec un liant ou bien sous forme de sol-gel.

L'invention concerne également un procédé pour l'obtention du maténau scintillateur M₁₋ₓCeₓCl₃, définl ci-dessus, sous forme de monocristal par méthode de croissance Bridgman, par exemple en ampoules de quartz scellées sous vide, notamment à partir d'un mélange de poudres commerciales de MCl₃ et CeCl₃

L'invention concerne également l'utilisation du matériau scintillateur ci-dessus comme composant d'un détecteur de rayonnement notamment par rayons gamma et/ou rayons X.

Un tel détecteur comprend notamment un photodétecteur couplé optiquement au scintillateur pour produire un signal électrique en réponse à l'émission d'une impulsion de lumière produite par le scintillateur.

Le photodétecteur du détecteur peut notamment être un photomultiplicateur, ou bien une photodiode, ou bien un capteur CCD.

L'utilisation préférée de ce type de détecteur porte sur la mesure de rayonnements gamma ou X ; un tel système est également susceptible de détecter les rayonnements Alpha, Beta et les électrons. L'invention concerne également l'utilisation du détecteur ci-dessus dans les appareils de médecine nucléaire, notamment les Gamma caméra de type Anger et les scanners à Tomographie d'Emission de Positron (voir par exemple C.W.E Van Eijk, " Inorganic Scintillator for Medical Imaging ", International Seminar New types of Detectors, 15-19 May 1995 - Archamp, France Publié dans "Physica Medica", Vol XII, supplément 1, Juin 96).

Selon une autre variante, l'invention concerne l'utilisation du détecteur ci-dessus dans les appareils de détection pour forage pétrolier, (voir par exemple " Applications of scintillation counting and analysis ", dans " Photomultiplier tube, principle and application", chapître 7, Philips).

D'autres détails et caractéristiques ressortent de la description ci-après de modes de réalisation préférés non limitatifs et de données obtenues sur des échantillons constitués de monocristaux selon l'invention.

Le tableau 1 présente les résultats de caractéristiques de scintillation pour des exemples selon l'invention (exemples 1 à 5) ainsi que des exemples comparatifs (exemples A à D).

x correspond au taux, exprimé en mole %, de cérium substitué à l'atome M

Les mesures sont effectuées sous une excitation de rayon γ à 662 keV. Les conditions de mesures sont précisées dans la publication de O. Guillot-Noël, citée plus haut.

L'intensité d'émission est exprimée en photon par MeV.

L'intensité d'émission est reportée en fonction du temps d'intégration jusqu'à 0,5 , 3 et 10 microsecondes.

La composante rapide de scintillation est caracténsée par sa constante de temps de décroissance " decay time ", τ, en nanoseconde, et par son intensité de scintillation (en photon/MeV), qui représente la contribution de cette composante au nombre total de photons émis par le scintillateur.

Les échantillons correspondants aux mesures des exemples A à D et 1 à 3 et 5 sont des petits monocristaux, de l'ordre de 10 mm³, et l'échantillon de l'exemple 4 est un monocristal relativement grand de 8 mm de diamètre et 5 mm de hauteur. On constate une bonne reproductibilité des résultats obtenus entre l'échantillon de petite (ex3) et de grande taille (ex4).

Du tableau 1, on constate que les composés de type M₁₋ₓCeₓCl₃ comprenant moins de 1 mole % de cérium (exemples A, D) ont une résolution en énergie supérieure à 7 % et de faibles intensités de la composante rapide de scintillation (de l'ordre de1500 ph/MeV). Le LaCl₃ sans dopage a une constante de temps de décroissance de la première composante de l'ordre de 3500 ns (exC), donc extrêmement lente.

Dans le cas d'un composé fluoré dopé à plus de 1 mole % de cérium (exemple B), le déclin de scintillation est très rapide mais le rendement global de scintillation est très faible.

Les exemples selon l'invention, ex1 à ex5, présentent tous des constantes de temps de décroissance de la composante rapide de fluorescence très avantageuses, comprises entre 20 et 30 ns et l'intensité de scintillation de cette composante rapide est remarquable et est supérieure à 4000 ph/MeV. Elle atteint environ 20000 ph/MeV pour un matériau comprenant 10 mole % de cérium.

En outre la résolution, R, de ces exemples selon l'invention est excellente et revêt un caractère inattendu.

En effet, d'un point de vue statistique, il est admis que la résolution en énergie varie proportionnellement à l'inverse de la racine carrée du nombre total de photons émis. (voir notamment : GF Knoll, "Radiation Detection and Measurement", John Wiley and Sons, Inc, 2^{nd} édition, p 116). Ce nombre total de photons correspond à l'intensité d'émission à saturation que mesure la valeur d'intensité d'émission à 10 µs.

En considérant le nombre total de photons émis par LaCl₃ comprenant plus de 1 mole % de cérium comparé à LaCl₃ dopé à 0,57 mole % on s'attend à une faible amélioration relative de la résolution d'au mieux 5 %, celle ci passant donc de 7,3% à environ 6,9%.

De manière particulièrement surprenante, les inventeurs ont constaté une amélioration considérable de la résolution en énergie pour un taux de cérium supérieur à 1 % en mole dans les matériaux M₁₋ₓCeₓCl₃. Cette amélioration est environ d'un facteur 2 pour LaCl₃ comprenant 2 mole %, 4 mole %, 10 mole %, 30 mole % de cérium (exemples 1 à 5).

Des maténaux scintillateurs ayant de telles performances sont particulièrement adaptés pour augmenter les performances des détecteurs, à la fois en terme de résolution en énergie, de résolution temporelle et de taux de comptage.

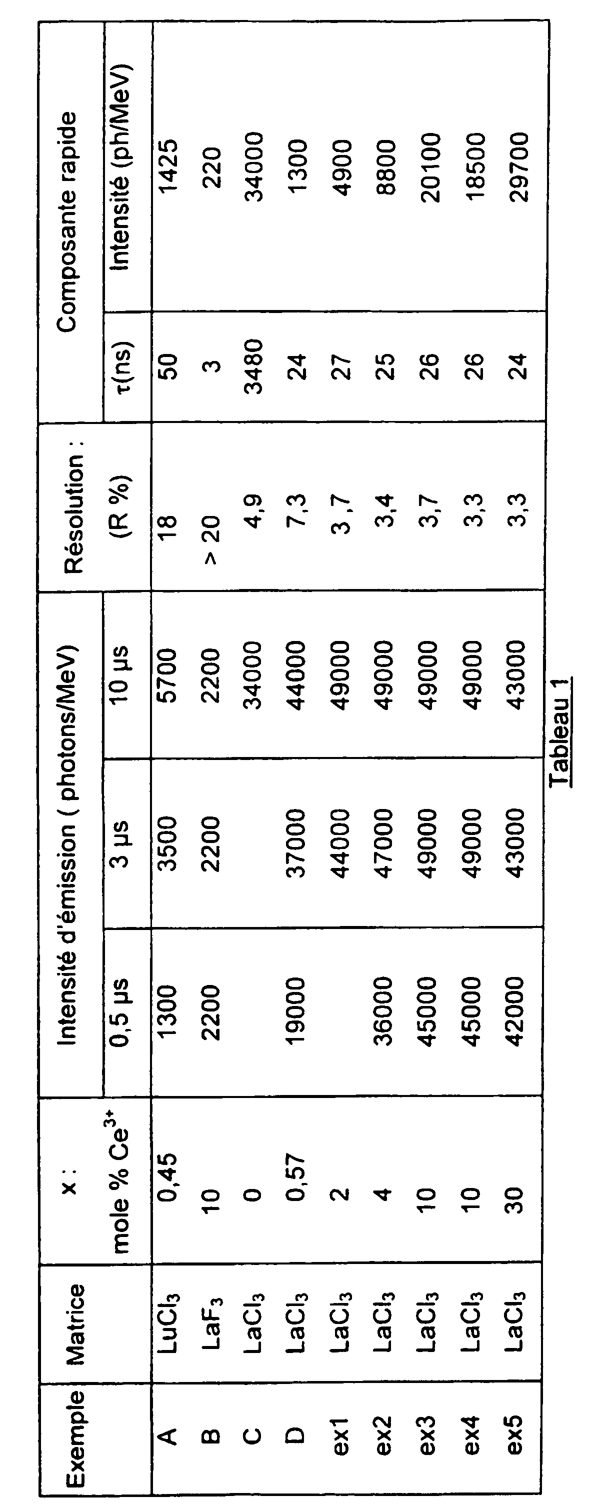

## Revendications

1. Matériau scintillateur inorganique de composition générale M₁₋ₓCeₓCl₃, où M est choisi parmi les éléments ou les mélanges d'éléments du groupe : Y, La, Gd, Lu, notamment parmi les éléments ou les mélanges d'éléments du groupe : La, Gd, Lu, et où x est le taux molaire de substitution de M par du cérium, avec x supérieur ou égal à 1 mole % et inférieur ou égal à 50 moles %.

2. Matériau scintillateur inorganique sous forme de monocristal, de composition générale M₁₋ₓCeₓCl₃, où M est choisi parmi les lanthanides ou les mélanges de lanthanides, de préférence parmi les éléments ou les mélanges d'éléments du groupe : Y, La, Gd, Lu, notamment parmi les éléments ou les mélanges d'éléments du groupe : La, Gd, Lu, et où x est le taux molaire de substitution de M par du cérium, avec x supérieur ou égal à 1 mole % et strictement inférieur à 100 moles %.

3. Matériau scintillateur selon la revendication précédente, **caractérisé en ce qu'**il est supérieur à 10 mm³.

4. Matériau scintillateur selon la revendication précédente, **caractérisé en ce qu'**il est supérieur à 1 cm³.

5. Matériau scintillateur selon la revendication précédente, **caractérisé en ce qu'**il est supérieur à 10 cm³.

6. Matériau scintillateur selon l'une des revendications 2 à 5 **caractérisé en ce que** x est inférieur ou égal à 90 mole %, notamment inférieur ou égal à 50 mole %.

7. Matériau scintillateur selon l'une des revendications précédentes **caractérisé en ce que** x est inférieur ou égal à 30 mole %.

8. Matériau scintillateur selon l'une des revendications précédentes, **caractérisé en ce que** x est supérieur ou égal à 2 mole %, de préférence supérieur ou égal à 4 mole %.

9. Matériau scintillateur selon l'une des revendications précédentes **caractérisé en ce que** sa résolution en énergie est inférieure à 6 % et même à 5 % pour une mesure avec des photons gamma à 662 keV.

10. Matériau scintillateur selon l'une des revendications précédentes **caractérisé en ce que** M est du lanthane, (La).

11. Détecteur de scintillation comprenant un matériau scintillateur inorganique de composition générale M₁₋ₓCeₓCl₃, où M est choisi parmi les lanthanides ou les mélanges de lanthanides, de préférence parmi les éléments ou les mélanges d'éléments du groupe : Y, La, Gd, Lu, notamment parmi les éléments ou les mélanges d'éléments du groupe : La, Gd, Lu, et où x est le taux molaire de substitution de M par du cérium, avec x supérieur ou égal à 1 mole % et strictement inférieur à 100 moles %.

12. Détecteur selon la revendication précédente, **caractérisé en ce que** M est du lanthane, (La).

13. Détecteur selon l'une des revendications de détecteur précédentes, **caractérisé en ce que** la résolution en énergie du matériau scintillateur est inférieure à 6 % et même à 5 % pour une mesure avec des photons gamma à 662 keV.

14. Détecteur selon l'une des revendications de détecteur précédentes, **caractérisé en ce que** x est inférieur ou égal à 90 mole %, notamment inférieur ou égal à 50 mole %, et voire même inférieur ou égal à 30 mole %.

15. Détecteur selon l'une des revendications de détecteur précédentes, **caractérisé en ce que** x est supérieur ou égal à 2 mole %, de préférence supérieur ou égal à 4 mole %.

16. Détecteur selon l'une des revendications de détecteur précédentes, **caractérisé en ce que** le matériau scintillateur est une poudre ou un polycristal.

17. Détecteur selon l'une des revendication 11 à 13, **caractérisé en ce que** le matériau scintillateur est l'un de l'une des revendications 2 à 8.

18. Scanner à Tomographie d'Emission de Positron comprenant le détecteur de scintillation de l'une des revendications de détecteur précédentes.

19. Gamma Caméra de type Anger comprenant le détecteur de scintillation de l'une des revendications de détecteur précédentes.

20. Utilisation du monocristal ou du détecteur ou du scanner ou de la gamma caméra de type Anger de l'une des revendications précédentes dans le domaine médical et/ou la détection pour le forage pétrolier.

21. Procédé de croissance du matériau scintillateur de l'une des revendications 2 à 6, **caractérisé en ce qu'**il est obtenu par méthode de croissance Bridgman, notamment en ampoules de quartz scellées sous vide, par exemple à partir d'un mélange de poudres de MCl₃ et CeCl₃.

## Patentansprüche

1. Anorganisches Szintillatormaterial mit der allgemeinen Zusammensetzung M₁₋ₓCeₓCl₃, worin M aus den Elementen oder Gemischen aus Elementen der Gruppe Y, La, Gd und Lu, insbesondere aus den Elementen oder Gemischen aus Elementen der Gruppe La, Gd und Lu, ausgewählt ist und x den molaren Anteil der Substitution von M durch Cer, mit x größer als oder gleich 1 Mol-% und kleiner als oder gleich 50 Mol-%, bedeutet.

2. Anorganisches Szintillatormaterial in Form eines Einkristalls mit der allgemeinen Zusammensetzung M₁₋ₓCeₓCl₃, worin M aus den Lanthanoiden oder Gemischen aus Lanthanoiden, vorzugsweise aus den Elementen oder Gemischen aus Elementen der Gruppe Y, La, Gd und Lu, insbesondere aus den Elementen oder Gemischen aus Elementen der Gruppe La, Gd und Lu, ausgewählt ist und x den molaren Anteil der Substitution von M durch Cer, mit x größer als oder gleich 1 Mol-% und streng kleiner als 100 Mol-%, bedeutet.

3. Szintillatormaterial nach dem vorhergehenden Anspruch, **dadurch gekennzeichnet, dass** es mehr als 10 mm³ einnimmt.

4. Szintillatormaterial nach dem vorhergehenden Anspruch, **dadurch gekennzeichnet, dass** es mehr als 1 cm³ einnimmt.

5. Szintillatormaterial nach dem vorhergehenden Anspruch, **dadurch gekennzeichnet, dass** es mehr als 10 cm³ einnimmt.

6. Szintillatormaterial nach einem der Ansprüche 2 bis 5, **dadurch gekennzeichnet, dass** x weniger als oder gleich 90 Mol-% und insbesondere weniger als oder gleich 50 Mol-% beträgt.

7. Szintillatormaterial nach einem der vorhergehenden Ansprüche, **dadurch gekennzeichnet, dass** x weniger als oder gleich 30 Mol-% beträgt.

8. Szintillatormaterial nach einem der vorhergehenden Ansprüche, **dadurch gekennzeichnet, dass** x mehr als oder gleich 2 Mol-% und vorzugsweise mehr als oder gleich 4 Mol-% beträgt.

9. Szintillatormaterial nach einem der vorhergehenden Anspruche, **dadurch gekennzeichnet, dass** seine Energieauflösung unter 6 % und sogar unter 5 % bei einer Messung mit γ-Photonen mit 662 keV beträgt.

10. Szintillatormaterial nach einem der vorhergehenden Ansprüche, **dadurch gekennzeichnet, dass** M Lanthan (La) bedeutet.

11. Szintillationsdetektor, der ein anorganisches Szintillatormaterial mit der allgemeinen Zusammensetzung M₁₋ₓCeₓCl₃ umfasst, worin M aus den Lanthanoiden oder Gemischen aus Lanthanoiden, vorzugsweise aus den Elementen oder Gemischen aus Elementen der Gruppe Y, La, Gd und Lu, insbesondere aus den Elementen oder Gemischen aus Elementen der Gruppe La, Gd und Lu, ausgewählt ist und x den molaren Anteil der Substitution von M durch Cer, mit x größer als oder gleich 1 Mol-% und streng kleiner als 100 Mol-%, bedeutet.

12. Detektor nach dem vorhergehenden Anspruch, **dadurch gekennzeichnet, dass** M Lanthan (La) bedeutet.

13. Detektor nach einem der ihn betreffenden vorhergehenden Ansprüche, **dadurch gekennzeichnet, dass** die Energieauflösung des Szintillatormaterials unter 6 % und sogar unter 5 % bei einer Messung mit γ-Photonen mit 662 keV beträgt.

14. Detektor nach einem der ihn betreffenden vorhergehenden Ansprüche, **dadurch gekennzeichnet, dass** x weniger als oder gleich 90 Mol-%, insbesondere weniger als oder gleich 50 Mol-%, und sogar weniger als oder gleich 30 Mol-% beträgt.

15. Detektor nach einem der ihn betreffenden vorhergehenden Ansprüche, **dadurch gekennzeichnet, dass** x mehr als oder gleich 2 Mol-% und vorzugsweise mehr als oder gleich 4 Mol-% beträgt.

16. Detektor nach einem der ihn betreffenden vorhergehenden Ansprüche, **dadurch gekennzeichnet, dass** das Szintillatormaterial aus einem Pulver oder Polykristall besteht.

17. Detektor nach einem der Ansprüche 11 bis 13, **dadurch gekennzeichnet, dass** das Szintillatormaterial eines nach einem der Ansprüche 2 bis 8 ist.

18. Positronenemissionstomograph, der den Szintillationsdetektor nach einem der ihn betreffenden vorhergehenden Ansprüche umfasst.

19. Anger-Gammakamera, die den Szintillationsdetektor nach einem der ihn betreffenden vorhergehenden Ansprüche umfasst.

20. Verwendung des Einkristalls, des Detektors, des Tomographen oder der Anger-Gammakamera nach einem der vorhergehenden Ansprüche auf dem Gebiet der Medizin und/oder der Detektion für eine Erdölbohrung.

21. Verfahren zum Züchten des Szintillatormaterials nach einem der Ansprüche 2 bis 6, **dadurch gekennzeichnet, dass** es durch das Bridgman-Verfahren, insbesondere unter Vakuum in versiegelten Quarzampullen, beispielsweise aus einem MCl₃-CeCl₃-Pulvergemisch, erhalten wird.

## Claims

1. Inorganic scintillating material of general composition M₁₋ₓCeₓCl₃, where M is chosen from the elements or the mixtures of elements of the group: Y, La, Gd and Lu, especially from the elements or the mixtures of elements of the group: La, Gd and Lu, and where x is the molar level of substitution of M by cerium, where x is greater than or equal to 1 mol% and less than or equal to 50 mol%.

2. Inorganic scintillating material in single-crystal form of general composition M₁₋ₓCeₓCl₃, where M is chosen from the lanthanides or mixtures of lanthanides, preferably from the elements or the mixtures of elements of the group: Y, La, Gd and Lu, especially from the elements or the mixtures of elements of the group: La, Gd and Lu, and where x is the molar level of substitution of M by cerium, where x is greater than or equal to 1 mol% and strictly less than 100 mol%.

3. Scintillating material according to the preceding claim, **characterized in that** it is greater than 10 mm³.

4. Scintillating material according to the preceding claim, **characterized in that** it is greater than 1 cm³.

5. Scintillating material according to the preceding claim, **characterized in that** it is greater than 10 cm³.

6. Scintillating material according to one of Claims 2 to 5, **characterized in that** x is less than or equal to 90 mol%, especially less than or equal to 50 mol%.

7. Scintillating material according to one of the preceding claims, **characterized in that** x is less than or equal to 30 mol%.

8. Scintillating material according to one of the preceding claims, **characterized in that** x is greater than or equal to 2 mol%, preferably greater than or equal to 4 mol%.

9. Scintillating material according to one of the preceding claims, **characterized in that** its energy resolution is less than 6% and even than 5% for a measurement with gamma photons at 662 keV.

10. Scintillating material according to one of the preceding claims, **characterized in that** M is lanthanum (La).

11. Scintillation detector comprising an inorganic scintillating material of general composition M₁₋ₓCeₓCl₃, where M is chosen from the lanthanides or mixtures of lanthanides, preferably from the elements or the mixtures of elements of the group: Y, La, Gd and Lu, especially from the elements or the mixtures of elements of the group: La, Gd and Lu, and where x is the molar level of substitution of M by cerium, where x is greater than or equal to 1 mol% and strictly less than 100 mol%.

12. Detector according to the preceding claim, **characterized in that** M is lanthanum (La).

13. Detector according to one of the preceding detector claims, **characterized in that** the energy resolution of the scintillating material is less than 6% and even less than 5% for a measurement with gamma photons at 662 keV.

14. Detector according to one of the preceding detector claims, **characterized in that** x is less than or equal to 90 mol%, especially less than or equal to 50 mol%, and even less than or equal to 30 mol%.

15. Detector according to one of the preceding detector claims, **characterized in that** x is greater than or equal to 2 mol%, preferably greater than or equal to 4 mol%.

16. Detector according to one of the preceding detector claims, **characterized in that** the scintillating material is a powder or a polycrystal.

17. Detector according to one of Claims 11 to 13, **characterized in that** the scintillating material is one from one of Claims 2 to 8.

18. Positron emission tomography scanner comprising the scintillation detector of one of the preceding detector claims.

19. Gamma camera of the Auger type comprising the scintillation detector of one of the preceding detector claims.

20. Use of the single crystal or of the detector or of the scanner or of the gamma camera of the Auger type of one of the preceding claims in the medical field and/or detection for oil drilling.

21. Method of growing the scintillating material of one of Claims 2 to 6, **characterized in that** it is obtained by the Bridgeman growth method, in particular in evacuated sealed quartz ampoules, for example from a mixture of MCl₃ and CeCl₃ powders.
